# EUROPEAN PATENT SPECIFICATION

(11) **EP 1 289 813 B1**
(45) Date of publication and mention of the grant of the patent: **23.08.2006**
(21) Application number: 01956456.6
(22) Date of filing: 05.06.2001
(51) Int. Cl.: B60T 8/00

(54) **SYSTEM FOR DETERMINING THE STATE OF SHEAR DEFORMATION OF A CROWN PORTION OF A TYRE DURING THE RUNNING OF A MOTOR VEHICLE**
SYSTEM ZUR ERMITTLUNG DES SCHERVERFORMUNGSZUSTANDES EINER REIFENLAUFFLÄCHE WÄHREND DER FAHRT EINES KRAFTFAHRZEUGES
SYSTEME POUR DETERMINER L'ETAT DE CISAILLEMENT D'UNE PARTIE DE SOMMET DE PNEU PENDANT LA MARCHE D'UN VEHICULE A MOTEUR

(30) Priority: 09.06.2000 EP 00830415; 21.07.2000 US 219694 P
(43) Date of publication of application: 12.03.2003
(73) Proprietor: Pirelli Tyre S.p.A., 20126 Milano (IT)
(72) Inventor: MANCOSU, Federico, I-20135 Milano (IT); BELLUZZO, Damiano, I-20077 Melegnano (Milano) (IT); MATRASCIA, Giuseppe, I-20038 Seregno (IT)
(74) Representative: Marchi, Massimo
(86) International application number: PCT/EP2001/006364
(87) International publication number: WO 2001/094168

(56) References cited:
- WO-A-93/25400
- DE-A- 3 937 966
- FR-A- 2 755 906
- US-A- 5 502 433
- US-A- 5 964 265

## Description

The present invention relates to a system for determining the state of shear deformation (slipping) of a crown portion of a tyre, during the running of a motor vehicle.

Knowledge of the operating conditions of a tyre, during the running of a motor vehicle, makes it possible to provide operations of monitoring and regulating the behaviour of the motor vehicle. In particular, it is useful to know the slipping or non-slipping state of the tyre, the variation of the available adhesion with respect to a reference condition, the variation of the forces exchanged between the tyre and the road in order to activate, for example, anti-locking devices (antiskid or ABS) in braking, antislip devices in acceleration, active suspension, etc.

Document FR 2 755 906 discloses a tyre comprising a magnetic field generator and a sensor for detecting said magnetic field is mounted on the wheel arch of the vehicle.

European patent publication EP 1230115 A, filed on 8 November 2000 in the name of the present applicant, discloses a device for monitoring the behaviour of a tyre.

This device comprises one or more sensors, located at predetermined points of a tyre and capable of supplying, during the rotation of the tyre, signals indicating the positions assumed by these points in space.

The position signals of a point of the tyre can be used to determine its cyclic displacement, in other words the variation of the displacement of the point during each revolution of the tyre or the cyclic variation of the velocity vector in space. According to the situation to be monitored, the longitudinal displacement (in the direction of advance of the tyre), the transverse or lateral displacement (orthogonal to the direction of advance), the vertical displacement of the point, or the relative velocities are taken into consideration.

The device makes a comparison between the cyclic variation of the displacement or of the velocity of the point, measured in the i-th revolution, and a reference cyclic variation of displacement or velocity, in particular that measured in the i-th-1 revolution, in other words the immediately preceding revolution, and supplies a signal indicating the instantaneous behaviour of the tyre.

European patent publication EP 1263616 A, filed on 14 March 2001 in the name of the present applicant, discloses a system for continuous determination of the interaction between a tyre and the ground during the running of a motor vehicle.

In this system, the tyre comprises at least one sensor, operatively associated with processing means. Said sensor is based on an elongate piezoelectric element. The elongate piezoelectric element extends along at least a portion of the tyre and is capable of supplying a signal which is produced by the rotation of the tyre. The signal is formed cyclically on each revolution of the tyre and has distinctive elements. The processing means acquire the signal to detect variations of time interval between its predetermined distinctive elements.

These variations of time interval between the distinctive elements of the signal indicate the variations of angular velocity of the tyre.

It has now been found that it is possible to detect the state of shear deformation of a portion of the crown of a tyre, thus checking the conditions of interaction between a tyre and the ground, with a system comprising a magnetic field generator.

Therefore, the invention relates to a system for determining the state of shear deformation of a crown portion of a tyre during the running of a motor vehicle, comprising at least one sensor and processing means operatively associated with said sensor, said tyre having a carcass and a crown comprising a tread in its outermost part, and being fitted on a rim, characterized in that it further comprises at least one magnetic field generator applied to said tyre, said sensor being capable of detecting magnetic induction and being associated with said generator to supply a signal indicating the electrical potential difference which is generated within said sensor in the presence of said magnetic field, said signal representing the variation with time of the shear deformation of said crown portion of said tyre.

Preferably, said generator is a strip of magnetic material.

Advantageously, said sensor is a strip of current-conducting material, connectable to an electrical power supply, preferably of the direct current type.

In one embodiment, a further generator strip is applied to said tread and a further sensor strip is applied to a predetermined part of said motor vehicle, close to said tyre.

Preferably, said generator strip extends along at least one portion of a circumference of said tyre.

In turn, said sensor strip extends along at least one portion of a circumference of said rim.

In one embodiment, said generator strip extends along at least one portion of a meridian profile of said tyre and said sensor strip extends along at least one transverse portion of said rim.

In a second aspect, the invention relates to a tyre having a carcass and a crown comprising a tread in its outermost part, said tyre being fitted on a rim, characterized in that at least one magnetic field, generator is applied to said tyre at an inner surface of said carcass, said magnetic generator being associated with a sensor applied to said rim capable of detecting magnetic induction and of supplying a signal indicating the electrical potential difference generated within said sensor in the presence of said magnetic field, said signal representing the variation with time of the shear deformation of one crown portion of said tyre.

The system according to the invention supplies the variation with time of the state of shear deformation of one crown portion of the tyre, and typically of the tread, which, during the rotation of the tyre, is engaged with the road in the contact area (footprint).

The magnetic generators are positioned in a suitable way in the tyre, for example in the tread and within the carcass, and are deformed in the same way as the parts of the tyre to which they are applied. During the running of the motor vehicle, a state of shear deformation (slipping) in the longitudinal direction (direction of advance of the tyre) develops when the tyre is engaged in braking or acceleration, and in the transverse or lateral direction (perpendicular to the direction of advance) when the tyre is engaged in cornering. In case of longitudinal and/or transverse slipping of the tread and carcass, the generators undergo deformations due to said slippings and produce a magnetic field whose intensity varies according to the deformations. The variations of magnetic field are detected by the magnetic induction sensor or sensors, and are manifested in the form of a potential difference which is proportional to the intensity of the magnetic field produced.

During each revolution of the tyre, the system measures "n" states of deformation of the tread, corresponding to "n" footprint areas following each other in the contact with the road. These states of deformation indicate the instantaneous slipping of the tyre in the footprint in the longitudinal direction and its instantaneous slip angle in the transverse direction.

Therefore, the variation with time of the longitudinal slipping and of the slip angle of the tread is known for each revolution of the tyre.

By analysing the variation of these factors with time, it is possible to know the operating conditions of the tyre at a given moment and to determine whether or not the tyre is in conditions of slipping and what the available adhesion is.

Given this information, it is possible to take action to regulate and/or optimize the behaviour of the tyre in straight running and/or in cornering.

Characteristics and advantages of the invention will now be illustrated with reference to an embodiment shown by way of example, without restrictive intent, in the attached figures, in which:
Fig. 1 is a perspective view of a tyre associated with a system for determining the state of shear deformation of a crown portion of the tyre, made according to the invention;
Fig. 2 is a cross-sectional view of the tyre of Fig. 1;
Fig. 3 is a partial perspective view, on an enlarged scale, of a portion of a magnetic induction sensor associated with the tyre of Fig. 1;
Fig. 4 shows a motor vehicle provided with the tyre of Fig. 1;
Figs. 5 and 6 show a variant of the tyre and of the system of Figs. 1 and 2;
Figs. 7 and 8 show a further variant of the tyre and of the system of Figs. 1 and 2;
Fig. 9 is a graph which shows a signal emitted by a magnetic induction sensor associated with the tyre of Figs. 7 and 8;
Figs. 10, 11 and 12 show a further variant of the tyre and of the system of Figs. 1 and 2.

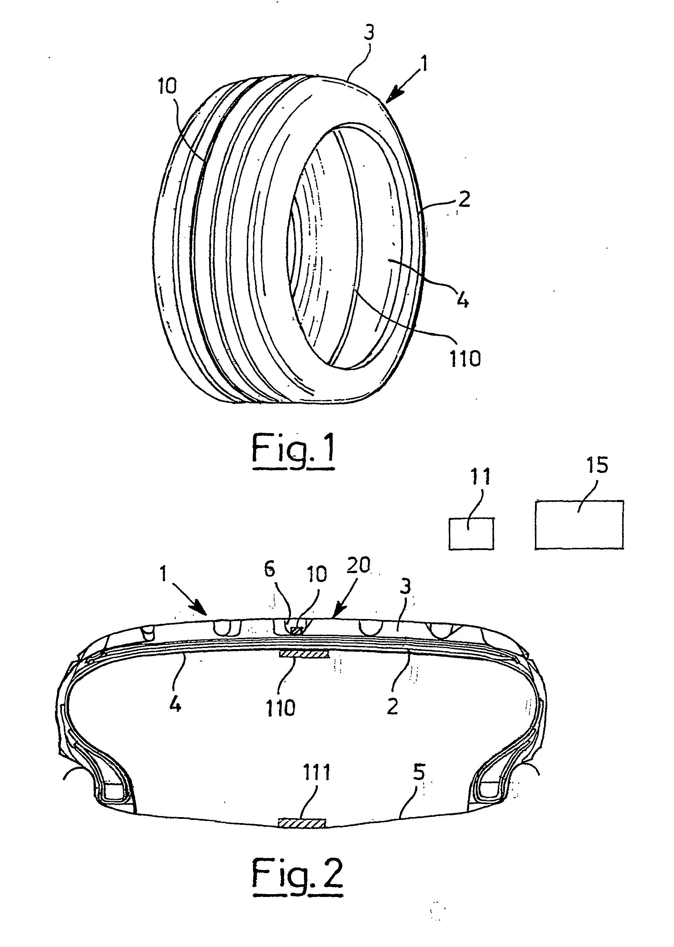

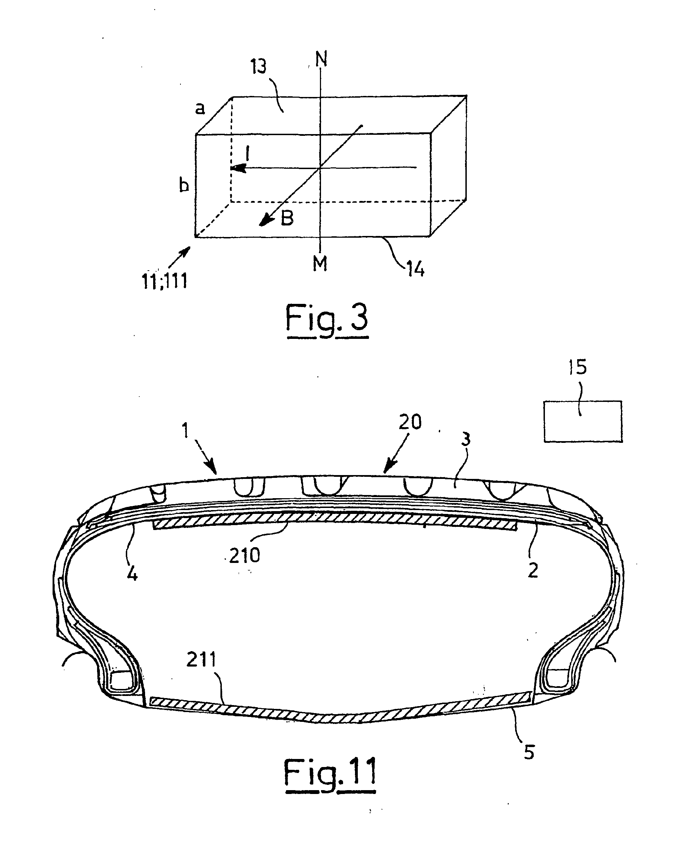

Figs. 1 and 2 show a tyre 1 for a motor vehicle, having a carcass 2 and a crown 20 comprising a tread 3 in its outermost part. The carcass 2 has an inner surface 4, which may be covered by an airtight lining layer. The tyre 1 is fitted tightly on a rim 5.

The tyre 1 is associated with a system for determining the state of shear deformation of a portion of the crown 20. The system comprises a magnetic field generator 10. The magnetic generator 10 is of the type not supplied with electrical power, and comprises a permanent magnet, for example a strip of ferromagnetic material. In a variant, the generator 10 can be of the type supplied with electrical power, and in this case it can comprise a solenoid supplied with direct current.

The magnetic generator strip 10 is applied to the tread 3. It is positioned within a longitudinal channel 6 of the tread 3 and extends longitudinally, in the direction of advance of the tyre, along the whole equatorial circumference of the tread 3. Similar results are obtained when the magnetic generator strip 10 extends along only a portion of the equatorial circumference (a circumferential arc) of the tread 3.

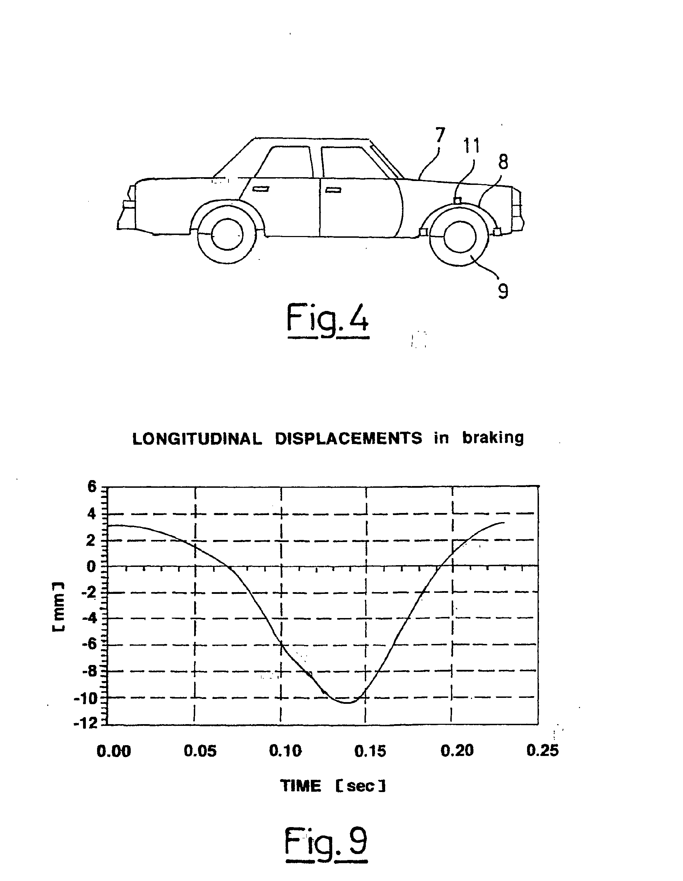

The magnetic generator 10 is associated with a magnetic induction sensor 11. The sensor 11 is applied to a wheel arch 8 of a motor vehicle 7 (Fig. 4) and/or a suspension, not shown, of a wheel 9. The magnetic induction sensor 11 comprises an electrical circuit supplied with direct current, preferably a strip of conducting material (Fig. 3) capable of detecting a magnetic field, by means of the Hall effect for example. In a variant, the magnetic induction sensor 11 can comprise a powered electrical circuit (such as a coil or solenoid) based on the mutual induction principle.

A second magnetic field generator of the strip type 110 is applied to the inner surface 4 of the carcass 2. The magnetic generator strip 110 has the same composition as the magnetic generator strip 10. It extends along the whole of the equatorial circumference of the carcass 2, but can also extend along only a portion of the equatorial circumference (a circumferential arc) of the carcass 2.

The magnetic generator 110 is associated with a magnetic induction sensor 111 (Fig. 3) of the same type as the sensor 11. The sensor 111 is applied to the rim 5 of the tyre 1.

Each magnetic generator 10, or 110, generates a magnetic field of intensity B, which is detected by the corresponding magnetic induction sensor 11 or 111. In the case of a magnetic induction sensor of the strip type using the Hall effect, the sensor is supplied with a direct current of intensity I and density i = I/ab, where "a" and "b" are, respectively, the thickness and the width of the magnetic induction sensor 11 or 111 (Fig. 3). When the magnetic induction field B has a constant intensity and acts on the magnetic induction sensor 11 or 111 in a direction perpendicular to the direction of the electric current I, between two faces of the sensor, for example the faces 13 and 14 orthogonal to the transverse axis MN which, in turn, is orthogonal to the plane on which the vectors I and B lie, a potential difference V_{M} - V_{N} = C(BI/a) is established, where C is a constant which depends on the material used for the sensor 11 or 111.

Therefore, a potential difference proportional to the intensity of the magnetic induction field B is generated in the magnetic induction sensor 11 or 111.

During the rotation of the tyre 1, in free rolling conditions, the intensity of the magnetic field produced, respectively, by the generator 10 and the generator 110 is constant.

On the contrary, phenomena of longitudinal slipping occur in the tyre 1 in straight running in conditions of braking or acceleration, and phenomena of transverse slipping are present in cornering (in drift).

In the presence of slipping, the magnetic generators 10 and 110 are deformed in the same way as, respectively, the tread 3 and the carcass 2 to which they are applied.

When there is longitudinal slipping of the tread 3, the intensity of the magnetic field produced by the magnetic generator 10 varies with respect to the intensity of the magnetic field produced by the generator 110. The sensors 11 and 111 detect these variations of magnetic field through variations of the potential difference which is generated, and emit electrical signals depending, in a known way, on the longitudinal slipping of the tread 3.

When there is transverse slipping of the tread, the magnetic generator 10 undergoes deformations beyond the plane of the equatorial circumference on which it is positioned. The intensity of the magnetic field produced by the magnetic generator 10 undergoes variations with respect to the condition of free rolling of the tyre 1. The magnetic induction sensor 11 detects these variations of magnetic field through the variation of the potential difference which is generated with respect to the value found when the tyre is in the free rolling condition, and emits electrical signals depending, in a known way, on the transverse slipping of the tread 3.

The comparisons between the state of deformation at the i-th instant and the state of deformation at the i-th-1 instant are preferably made during one revolution of the tyre and on a number of occasions equal to the number of signals emitted by the generators 10 and 110 and by the sensors 11 and 111 during one revolution.

The electrical signals emitted by the magnetic induction sensors 11 and 111 are converted, by transmitters (not shown), into analog or digital signals which can be transmitted over a distance. They can be, for example, in the form of radio signals.

The magnetic induction sensors 11 and 111 are operatively associated, by means of the aforesaid transmitters, with a controller 15 (Fig. 2) which acquires, stores and processes the signals emitted by the sensors 11 and 111.

The signals leaving the controller 15 can be used to operate regulating devices designed to control the behaviour of the motor vehicle, such as the brakes, accelerator, differential and suspension.

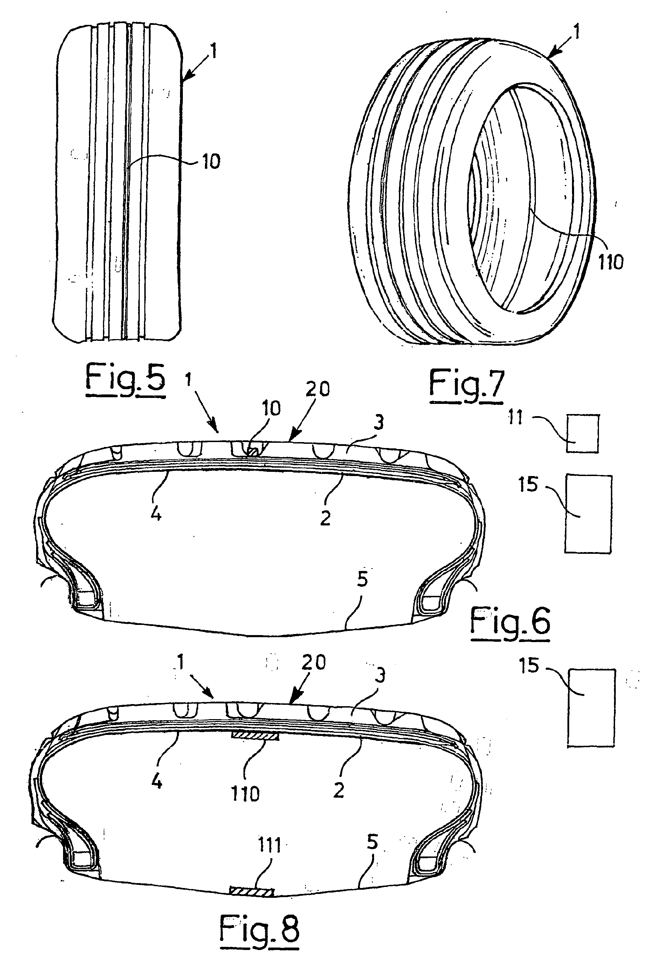

Figs. 5 and 6 show a tyre 1 provided with a single magnetic generator strip 10 associated with the magnetic induction sensor strip 11 and with the controller 15 to determine the transverse shear deformations of a crown portion of the tyre.

Figs. 7 and 8 show a tyre 1 provided with a single magnetic generator strip 110 associated with the magnetic induction sensor strip 111 and with the controller 15 to determine the transverse shear deformations of a crown portion of the tyre.

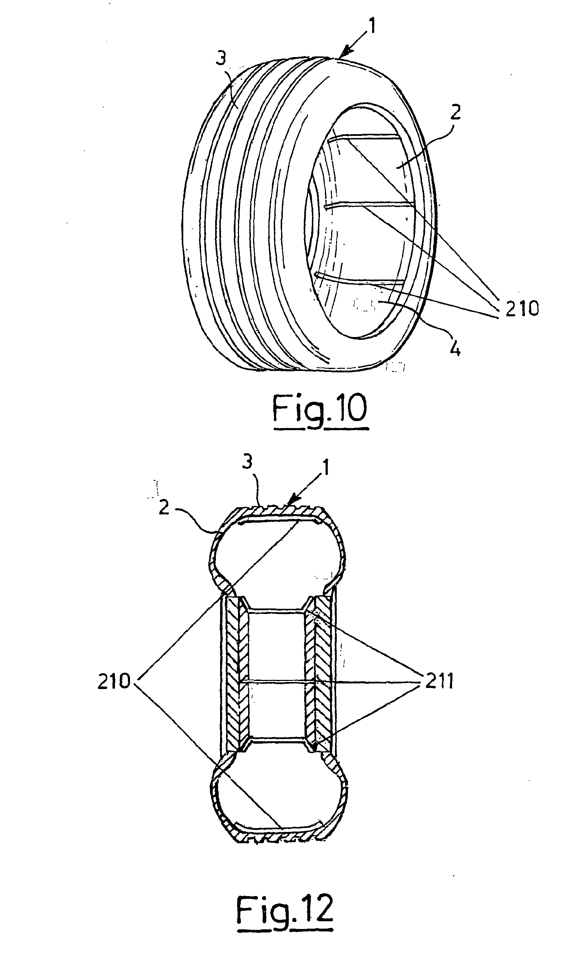

Fig. 9 is a graph which shows the variation of the shear deformation in the longitudinal direction, detected during braking in a tyre of the 195/65 R 15 size at an inflation pressure of 2 bars, in conditions of a vertical load of 3430 N, a coefficient of friction of 0.8, a velocity of 30 km/h, a longitudinal braking force of 2744 N and a slipping of 10%. The tyre was provided with the magnetic strip generator 110 and the magnetic induction sensor strip 111, like the tyre 1 of Figs. 7 and 8. The graph shows the longitudinal displacements (mm) of the tread as a function of the time (s) in the area of greatest deformation of the tyre.

Figs. 10, 11 and 12 show a tyre 1 provided with a plurality of magnetic generator strips 210 applied to the inner surface 4 of the carcass 2. Each magnetic generator strip 210 extends along a meridian profile of the carcass 2. The generators 210 are associated with magnetic induction sensor strips 211 applied to the rim 5. Each sensor strip 211 extends along a transverse portion or a generatrix of the rim 5. Each generator 210 faces the corresponding sensor 211.

The magnetic generators 210 can be applied in transverse grooves of the tread 3 and the sensors 211 can be applied to the wheel arch 8 of the motor vehicle.

The magnetic field generator according to the invention can be made from a metallic material, for example the metallic cords present in the cover of the tyre, for example those of the belts and/or of the carcass, once they have been suitably magnetized.

The magnetic field produced by the generator 210 depends, in terms of intensity, on the state of deformation of the tread 3 and of the carcass 2. In case of braking and acceleration of the tyre, the generators 210 undergo deformations beyond the corresponding meridian plane, and the sensors 211 register the shear deformations in the longitudinal direction of the tread 3. It is therefore possible to use the magnetic induction sensors 211 to register the operating conditions of the tyre 1 at a given instant.

The magnetic generators 10, 110 and 210 and the magnetic sensors 11, 111 and 211 are also capable of detecting the vertical flattening of the tyre 1 since the variation of intensity of the magnetic field due to a movement of the magnetic generators towards or away from each other in the radial direction is of a different extent from that due to the shear deformations. However, it is also possible to use magnetic generators and magnetic sensors dedicated solely to the determination of the vertical flattening, combined with magnetic generators and magnetic sensors dedicated to the determination of the shear deformations.

The system described above, comprising magnetic generators and magnetic sensor strips which extend along the equatorial circumference of the tyre and the rim respectively, offers the advantage of providing information continuously during a whole revolution of the tyre.

If a series of magnetic generators and magnetic sensor strips extending in a transverse direction is used, it is possible to register a plurality of deformation states in one revolution of the tyre and to obtain a number of items of information which increases with the number of generators and sensors used.

## Claims

1. System comprising a tyre (1) fitted on a rim (5) for determining the state of shear deformation of a crown portion of the tyre (1) during the running of a motor vehicle (7), comprising at least one sensor (111; 211) and processing means (15) operatively associated with said sensor (111, 211), said tyre (1) having a carcass (2) and a crown (20) comprising a tread (3) in its outermost part, **characterized in that** it further comprises at least one magnetic field generator (110; 210) applied to an inner surface of said carcass (2), said at least one sensor (111; 211) being applied to said rim (5) and being capable of detecting magnetic induction and being associated with said magnetic field generator (110; 210) to supply a signal indicating the electrical potential difference which is generated within said sensor in the presence of said magnetic field, said signal representing the variation with time of the shear deformation of said portion of said crown (20) of said tyre (1).

2. System according to Claim 1, **characterized in that** said at least one magnetic field generator (110; 210) is a strip of magnetic material.

3. System according to Claim 1, **characterized in that** said at least one sensor (111; 211) is a strip of current-conducting material, connectable to an electrical power supply.

4. System according to any of Claims 1-3, **characterized in that** a further magnetic field generator (10) is applied to said tread and a further sensor (11) is applied to a predetermined part (8) of said motor vehicle (7), close to said tyre (1).

5. System according to Claim 2, **characterized in that** said at least one magnetic field generator (110) extends along at least one portion of a circumference of said tyre (1).

6. System according to Claim 3, **characterized in that** said at least one sensor 111() extends along at least one portion of a circumference of said rim (5).

7. System according to Claim 2, **characterized in that** said magnetic field generator (210) extends along at least one portion of a meridian profile of said tyre (1).

8. System according to claim 3, **characterized in that** said sensor (211) extends along at least one transverse portion of said rim (5).

9. Tyre (1) having a carcass (2) and a crown (20) comprising a tread (3) in its outermost part, said tyre (1) being fitted on a rim (5), **characterized in that** at least one magnetic field generator (110; 210) is applied to said tyre (1) at an inner surface of said carcass (2), said magnetic generator (110; 210) being associated with a sensor (111; 211), applied to said rim (5), capable of detecting magnetic induction and of supplying a signal indicating the electrical potential difference generated within said sensor (11,211) in the presence of said magnetic field, said signal representing the variation with time of the shear deformation of one portion of said crown (20) of said tyre (1).

## Patentansprüche

1. System mit einem auf eine Felge (5) aufgepassten Reifen (1) zum Bestimmen des Scherverformungszustandes eines Kronenabschnitts des Reifens (1) bei fahrendem Kraftfahrzeug (7), wobei das System wenigstens einen Sensor (111; 211) und eine Verarbeitungseinrichtung (15) aufweist, die dem Sensor (111; 211) funktionsmäßig zugeordnet ist und wobei der Reifen (1) eine Karkasse (2) und eine Krone (20) mit einer Lauffläche (3) an ihrem äußersten Teil hat, **dadurch gekennzeichnet, dass** das System wenigstens einen Magnetfeldgenerator (110; 210) aufweist, der an der Innenfläche der Karkasse (2) angebracht ist, wobei der wenigstens eine Sensor (111; 211) an der Felge (5) angebracht ist, eine magnetische Induktion erfassen kann und dem Magnetfeldgenerator (110; 210) so zugeordnet ist, dass er ein Signal liefert, das die elektrische Potentialdifferenz anzeigt, die in dem Sensor bei Vorhandensein des Magnetfelds erzeugt wird, und wobei das Signal die zeitliche Änderung der Scherverformung des Abschnitts der Krone (20) des Reifens (1) darstellt.

2. System nach Anspruch 1, **dadurch gekennzeichnet, dass** der wenigstens eine Magnetfeldgenerator (110; 210) ein Streifen aus magnetischem Material ist.

3. System nach Anspruch 1, **dadurch gekennzeichnet, dass** der wenigstens eine Sensor (111; 211) ein Streifen aus einem stromleitenden Material ist, der mit einer Einspeisung für elektrische Energie verbindbar ist.

4. System nach einem der Ansprüche 1 bis 3, **dadurch gekennzeichnet, dass** ein weiterer Magnetfeldgenerator (10) an der Lauffläche und ein weiterer Sensor (11) an einem vorgegebenen Teil (8) des Kraftfahrzeugs (7) nahe an dem Reifen (1) angebracht ist.

5. System nach Anspruch 2, **dadurch gekennzeichnet, dass** der wenigstens eine Magnetfeldgenerator (110) sich längs wenigstens eines Teils des Umfangs des Reifens (1) erstreckt.

6. System nach Anspruch 3, **dadurch gekennzeichnet, dass** der wenigstens eine Sensor (111) sich längs wenigstens eines Teils des Umfangs der Felge (5) erstreckt.

7. System nach Anspruch 2, **dadurch gekennzeichnet, dass** sich der Magnetfeldgenerator (210) längs wenigstens eines Teils eines Meridianprofils des Reifens (1) erstreckt.

8. System nach Anspruch 3, **dadurch gekennzeichnet, dass** sich der Sensor (211) längs wenigstens eines Querteils der Felge (5) erstreckt.

9. Reifen mit einer Karkasse (2) und einer Krone (20), die an ihrem äußersten Teil eine Lauffläche (3) aufweist, wobei der Reifen (1) auf eine Felge (5) aufgepasst ist, **dadurch gekennzeichnet, dass** an dem Reifen (1) an einer Innenfläche der Karkasse (2) wenigstens ein Magnetfeldgenerator (110; 210) angebracht ist, wobei dem Magnetgenerator (110; 210) ein Sensor (111; 211) zugeordnet ist, der an der Felge (5) angebracht ist, eine magnetische Induktion erfassen kann und ein Signal liefert, das die elektrische Potentialdifferenz anzeigt, die in dem Sensor (111; 211) bei Vorhandensein des Magnetfelds erzeugt wird, und wobei das Signal die zeitliche Änderung der Scherverformung eines Teils der Krone (20) des Reifens (1) darstellt.

## Revendications

1. Système comprenant un pneu (1) monté sur une jante (5) pour déterminer l'état de déformation par cisaillement d'une partie sommet du pneu (1) pendant la marche d'un véhicule à moteur (7), comprenant au moins un capteur (111 ; 211) et un moyen de traitement (15) associé fonctionnellement audit capteur (111, 211), ledit pneu (1) ayant une carcasse (2) et un sommet (20) comprenant une bande de roulement (3) dans sa partie la plus extérieure, **caractérisé en ce qu'**il comprend en outre au moins un générateur de champ magnétique (110 ; 210) appliqué à une surface intérieure de ladite carcasse (2), ledit au moins un capteur (111 ; 211) étant appliqué à ladite jante (5) et étant capable de détecter une induction magnétique et étant associé audit générateur de champ magnétique (110 ; 210) pour fournir un signal indiquant la différence de potentiel électrique qui est produite dans ledit capteur en présence dudit champ magnétique, ledit signal représentant la variation dans le temps de la déformation par cisaillement de ladite partie dudit sommet (20) dudit pneu (1).

2. Système selon la revendication 1, **caractérisé en ce que** ledit au moins un générateur de champ magnétique (110 ; 210) est une bande de matériau magnétique.

3. Système selon la revendication 1, **caractérisé en ce que** ledit au moins un capteur (111 ; 211) est une bande de matériau conducteur, pouvant être connectée à une alimentation électrique.

4. Système selon l'une quelconque des revendications 1 à 3, **caractérisé en ce qu'**un générateur de champ magnétique supplémentaire (10) est appliqué à ladite bande de roulement et un capteur supplémentaire (11) est appliqué à une partie prédéterminée (8) dudit véhicule à moteur (7), à proximité dudit pneu (1).

5. Système selon la revendication 2, **caractérisé en ce que** ledit au moins un générateur de champ magnétique (110) s'étend le long d'au moins une partie d'une circonférence dudit pneu (1).

6. Système selon la revendication 3, **caractérisé en ce que** ledit au moins un capteur (111) s'étend le long d'au moins une partie d'une circonférence de ladite jante (5).

7. Système selon la revendication 2, **caractérisé en ce que** ledit générateur de champ magnétique (210) s'étend le long d'au moins une partie d'un profil méridien dudit pneu (1).

8. Système selon la revendication 3, **caractérisé en ce que** ledit capteur (211) s'étend le long d'au moins une partie transversale de ladite jante (5).

9. Pneu (1) comportant une carcasse (2) et un sommet (20) comprenant une bande de roulement (3) dans sa partie la plus extérieure, ledit pneu (1) étant monté sur une jante (5), **caractérisé en ce qu'**au moins un générateur de champ magnétique (110 ; 210) est appliqué audit pneu (1) sur une surface intérieure de ladite carcasse (2), ledit générateur magnétique (110 ; 210) étant associé à un capteur (111 ; 211), appliqué à ladite jante (5), capable de détecter une induction magnétique et de fournir un signal indiquant la différence de potentiel électrique produite dans ledit capteur (11, 211) en présence dudit champ magnétique, ledit signal représentant la variation dans le temps de la déformation par cisaillement d'une partie dudit sommet (20) dudit pneu (1).
